# EUROPEAN PATENT SPECIFICATION

(11) **EP 2 497 274 B1**
(45) Date of publication and mention of the grant of the patent: **23.10.2019**
(21) Application number: 10776437.5
(22) Date of filing: 27.10.2010
(51) Int. Cl.: G09G 3/36, G09G 3/20

(54) **AUTOSTEREOSCOPIC DISPLAY DEVICE**
AUTOSTEREOSKOPISCHE ANZEIGEVORRICHTUNG
AFFICHEUR AUTOSTÉRÉOSCOPIQUE

(30) Priority: 03.11.2009 EP 09174882
(43) Date of publication of application: 12.09.2012
(73) Proprietor: Koninklijke Philips N.V., 5656 AE Eindhoven (NL)
(72) Inventor: VAN DER HORST, Jan, NL-5656 AE Eindhoven (NL); KUIJPERS, Henricus, Joseph, Cornelus, NL-5656 AE Eindhoven (NL)
(74) Representative: Kroeze, Johannes Antonius
(86) International application number: PCT/IB2010/054857
(87) International publication number: WO 2011/055276

(56) References cited:
- EP-A1- 2 085 961
- EP-A2- 1 557 813
- EP-A2- 1 750 459
- WO-A1-2007/072330

## Description

### FIELD OF THE INVENTION

This invention relates to an autostereoscopic display device of the type that comprises a display panel having an array of display pixels for producing a display and an imaging arrangement for directing different views to different spatial positions.

### BACKGROUND OF THE INVENTION

A display according to the preamble that uses a lenticular (lens) arrangement as the imaging arrangement is known from US patent 6064424. The disclosed display has an array of elongate lenticular elements extending parallel to one another and overlying the display pixel array, and the display pixels are observed by a viewer through these lenticular elements.

The lenticular elements are provided as a sheet of elements, each of which comprises an elongate semi-cylindrical lens element. The lenticular elements extend mainly in the column direction of the display panel, with each lenticular element overlying a respective group of two or more adjacent columns of display pixels.

In an arrangement in which, for example, each lenticule is associated with two columns of display pixels, the display pixels in each column provide a vertical slice of a respective two dimensional sub-image. The lenticular sheet directs these two slices and corresponding slices from the display pixel columns associated with the other lenticules, to the left and right eyes of a user positioned in front of the sheet, so that the user observes a single stereoscopic image. The sheet of lenticular elements thus provides a light output directing function.

In other arrangements, each lenticule is associated with a group of four or more adjacent display pixels in the row direction. Corresponding columns of display pixels in each group are arranged appropriately to provide a vertical slice from a respective two dimensional sub-image. As a user's head is moved from left to right across the display, a series of successive, different, stereoscopic views are perceived creating, for example, a look-around impression.

The above described device provides an effective three dimensional display. However, it will be appreciated that, in order to provide stereoscopic views, there is a necessary sacrifice in the resolution as multiple pixel elements are needed to create a three dimensional pixel. This sacrifice in resolution is a problem for certain applications, such as the display of small text characters for viewing from short distances. For this reason, it has been proposed to provide a display device that is switchable between a two-dimensional mode and a three-dimensional (stereoscopic) mode.

One way to implement this is to provide an electrically switchable lenticular array as disclosed in US patent 6069650. In the two-dimensional mode, the lenticular elements of the switchable device operate in a "pass through" mode, i.e. they act in the same way as would a planar sheet of optically transparent material. The resulting display has a high resolution, equal to the native resolution of the display panel, which is suitable for the display of small text characters from short viewing distances. The two-dimensional display mode cannot provide a stereoscopic image.

The loss of resolution is also there for the 3D mode. On the one hand a large number of views per angle are needed for a good 3D impression and on the other hand a small number of views are needed for a sufficiently high resolution (i.e. number of pixels) per view.

It has been proposed in WO 2007/072330 to increase the resolution per view by providing an imaging arrangement which is electrically switchable between at least two 3D modes, wherein the effective position of the imaging arrangement is shifted laterally between the modes with respect to the display pixel elements by an amount which is a non-integer multiple of the pitch between the pixel elements.

These two modes enable the resolution per mode to be increased, by adding views at inter-pixel locations, or enable the number of views to be increased. This enables the loss of performance resulting from the generation of 3D images to be reduced. The amount of shift may for example comprise half the pitch between the pixel elements.

This proposed solution gives rise to a complicated imaging arrangement that requires switching between the two 3D modes.

EP 2 085 961 discloses a way of controlling a display to reduce off-axis gamma distortion. A backlight is driven in two phases to avoid backlight levels corresponding to low to mid grey tones. EP 1 557 813 discloses an LCD device which achieves increased resolution by using multiple pixel sub-components.

### SUMMARY OF THE INVENTION

It is an object of the invention to provide an autostereoscopic display device with improved resolution.

The invention is defined by the independent claims. The dependent claims define advantageous embodiments.

According to the invention, there is provided an autostereoscopic display device and a method of operating a display device. In the device and method time-multiplexing of sub-frames with different output information necessary for creating stereoscopic view of a frame comprising the sub-frames is combined with the use of different groups of sub-pixels for creating the sub-frames. In other words in one frame of a display output that can be stereoscopically viewed, the information for the left and right eye is provided in at least two sub frames that are output sequentially in time. The time multiplexing also means that control lines for driving the pixels can be shared. This enables a simpler implementation of the display wiring.

The terms pixels and sub-pixels have their usual meaning in the art where a color pixel is able to provide all colors of the display. A sub-pixel maybe any primary color such as red green or blue. The pixel may have an additional sub-pixel that is white. Pixels may be e.g. conventional triplets of neighboring sub-pixels, or may be multiprimari having more than three sub-pixels among which one or more are of the same primary color. All sub-pixels preferably have the same shape and size, but this need not be the case.

The imaging arrangement may be an array of display output light barriers in the form of an array of transparent slits positioned in front of the display panel. Alternatively and preferably the imaging arrangement is an array of lenticulars also known as lenticular elements. The slits and lenticulars are for example designed for directing light from the odd and even sub-pixel columns towards the different spatial positions. For example the slits or lenticulars may be sized and positioned in relation to the underlying pixels of the display in order that the output of the sub-pixels is directed to the left and right eye of a viewer in a certain spatial position at the viewing side of the autostereoscopic display.

The imaging arrangement may be switchable between an imaging mode for providing the autostereoscopic capability of the display and a non imaging mode for providing the autostereoscopic display with a mode in which it is capable of displaying a two dimensional image. Examples of such switchable imaging arrangements are in the form of a switchable lenticular array as disclosed in US patent 6069650, a switchable polarizer in combination with a birefringent lenticular as disclosed in international publication WO03/015424, or a switchable barrier based on for example a liquid crystal light modulator as disclosed in Proceedings of the SPIE, Volume 7329, pp. 732903-732903-8 (2009).

A frame is meant to represent a single image or one of the many single images in a motion picture. The individual frames are built up form sub-frames displayed at least partly in sequence. The Frame rate, or frame frequency, is the measurement of the frequency (rate) at which the display produces the frames. Frame rate is expressed in frames per second (FPS) and in progressive-scan monitors as hertz (Hz). In a still image the display may output a same frame while in a video output different frames may be output that together form the video output.

Preferably, the first and second sub-frames each include information for both eyes of the viewer simultaneously. In this arrangement, each sub-frame provides a full stereoscopic pair of images of a frame so that the two stereoscopic views are seen at the same time. This may avoid image artefacts which may otherwise result if the view for one eye is presented at a different time than the view for the other eye is presented and the difference is too long for the human eye and brain to synthesize the full stereoscopic image.

By dividing the frame into sub-frames and the corresponding frame time into sub frame times, the resolution can be built up in a sequence. The same data lines can be used to address the sub-pixels of the first and second sets so that the display wiring does not need to become more complicated. For example, each column (data line) can be connected to sub-pixels from both sets.

Preferably, the first sub-frame and the second sub-frame together define a complete frame for a display output to be viewed as one set of autostereoscopic images. In this way, the frame is divided into two lower resolution sub-frames.

The first and second sets of sub-pixels can together comprise all the sub-pixels, and no sub-pixel is in both the first and second sets. This means there are nonoverlapping patterns of sub-pixels, for example opposite checkerboard patterns defining the two sub-frames.

The sub-pixels can be grouped into color pixels, each color pixel comprising at least two red sub-pixels, or at least two green sub-pixels or at least two blue sub-pixels. Thus, half of the sub-pixels of a color pixel are driven in one sub-frame, and the other half of the sub-pixels of a color pixel are driven in the other sub-frame.

The sub frames can be driven at a rate of 100Hz, or at higher frequency.

The imaging arrangement preferably comprises an array of lenticulars. The pitch between the lenticulars may correspond to the pitch of an ensemble of five neighboring sub-pixels measured in the row direction.

The lenticulars preferably have a semi cylindrical shape with an elongate axis perpendicular to the curvature of the lenticular where the elongate axis is slanted to the column direction of the display panel which normally is the same as the vertical direction. Note that in displays with portrait and landscape mode, the column direction in the landscape mode is horizontal in the portrait mode. For example slant can be at an angle α where e.g. tan α = 1/3, or 1/6. However, other slant angles can be used as disclosed in US patent 6064424 or EP 1566683. A desired slant angle will depend on the pitch between lenses.

The display panel can comprise an array of individually addressable emissive, transmissive, refractive and/or diffractive display pixels. For example, the display panel can be a liquid crystal display panel having transmissive pixels in combination with backlight. Alternatively, the display panel can be a light emitting diode (LED) based display such as an organic light emitting diode (OLED) display panel, or a plasma display panel. The LED, OLED or plasma display panels may have fast sub-pixel response when compared to liquid crystal display panels enabling faster and/or more sub-frames per image frame displayed according to the invention.

### BRIEF DESCRIPTION OF THE DRAWINGS

Embodiments of the invention will now be described, purely by way of example, with reference to the accompanying drawings, in which:
Fig. 1 is a schematic perspective view of a known autostereoscopic display device;
Fig. 2 shows how a lenticular array provides different views to different spatial locations;
Fig. 3 is used to explain the benefit of a slanted focusing arrangement;
Fig. 4 shows a sub-pixel configuration suitable for use in the device of the invention;
Fig. 5 shows how the sub-pixel configuration of Fig. 4 is used to implement the invention;
Fig. 6 shows one possible arrangement for driving the rows and columns of sub-pixels; and
Fig. 7 shows an alternative slanted focusing arrangement;

### DETAILED DESCRIPTION OF EMBODIMENTS

The invention provides an autostereoscopic display in which the display output is provided within at least two sub-frames of a frame, a first sub-frame of a frame being displayed with a set of pixels that is different from the set with which the second sub-frame is displayed. In this way the pairs of images comprising images for the left and right eyes of a viewer, which together form a stereoscopic image are provided within one frame of display output while a higher resolution of the stereo image is obtained via time sequential build up of the frame over at least two sub-frames that are output time-sequentially.

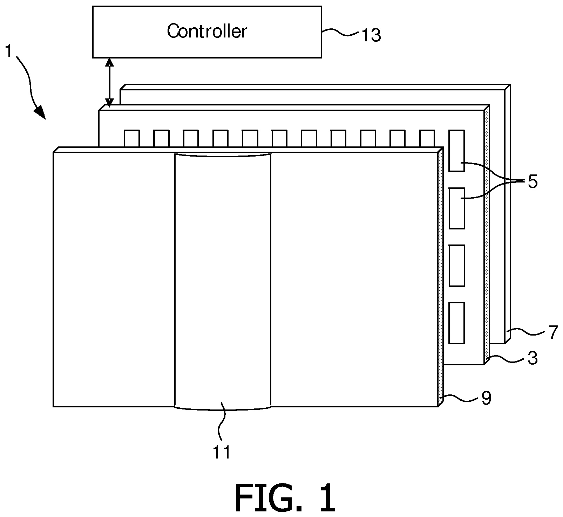

Fig. 1 is a schematic perspective view of a known autostereoscopic display device 1. The known device 1 comprises a liquid crystal display panel 3 of the active matrix type that acts as a spatial light modulator to produce the display.

The display panel 3 has an orthogonal array of display pixels arranged in rows and columns. Each display pixel is composed of three primary color sub-pixels 5; one being red, another green and another blue. For the sake of clarity, only a small number of display pixels are shown. In practice, the display panel 3 might comprise about one thousand rows and several thousand columns of display pixels. In this particular case a display pixel is thus a color pixel consisting of triplets of neighboring sub-pixels 5 and each color pixel has a red, green and blue rectangular sub-pixel. As such, the sub-pixels are also arranged in rows and columns.

The structure of the liquid crystal display panel 3 is entirely conventional. In particular, the panel 3 comprises a pair of spaced transparent glass substrates, between which an aligned twisted nematic or other liquid crystal material is provided. The substrates carry patterns of transparent indium tin oxide (ITO) electrodes on their facing surfaces. Polarizing layers are also provided on the outer surfaces of the substrates.

Each display pixel 5 comprises electrodes on the substrates, with the intervening liquid crystal material therebetween. The shape and layout of the display pixels 5 are determined by the shape and layout of the electrodes. The display pixels 5 are regularly spaced from one another by gaps, the gaps bring black mask of the display panel.

Each display sub-pixel 5 is associated with a switching element, such as a thin film transistor (TFT) or thin film diode (TFD). The display pixels are operated to produce the display by providing addressing signals to the switching elements, and suitable addressing schemes will be known to those skilled in the art.

The display panel 3 is illuminated by a light source 7 comprising, in this case, a planar backlight extending over the area of the display pixel array. Light from the light source 7 is directed through the display panel 3, with the individual display sub-pixels 5 being driven to modulate the light and produce the display.

The display device 1 also comprises a lenticular sheet 9, arranged over the display side of the display panel 3, which performs a view forming function. The lenticular sheet 9 comprises a row of lenticular elements 11 extending parallel to one another, of which only one is shown with exaggerated dimensions for the sake of clarity.

The lenticular elements 11 are in the form of convex semi-cylindrical lenses, and they act as a light output directing means to provide different images, or views, from the display panel 3 to the eyes of a user positioned in front of the display device 1.

Fig. 1 also shows schematically a controller 13 for driving the display device.

The autostereoscopic display device 1 shown in Fig. 1 is capable of providing several different perspective views in different directions. In particular, each lenticular element 11 overlies a small group of display sub-pixels 5 in each row. The lenticular element 11 projects each display sub-pixel 5 of a group in a different direction, so as to form the several different views. As the user's head moves from left to right, his/her eyes will receive different ones of the several views, in turn. A more detailed operation of view assignment is provided in US patent 6064424.

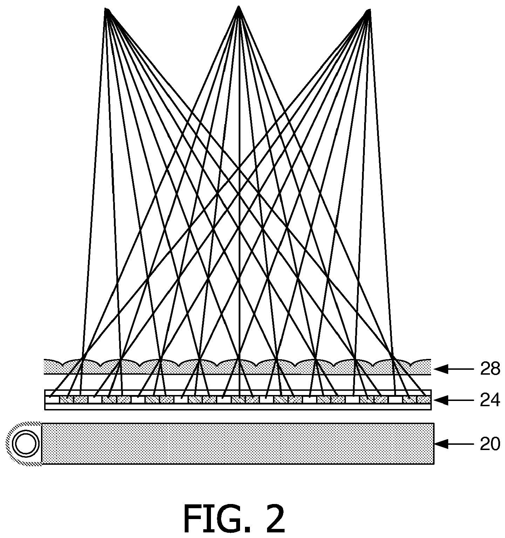

Fig. 2 shows the principle of operation of a lenticular type imaging arrangement as described above and shows the backlight 20, display device 24 such as an LCD and the lenticular array 28. Fig. 2 shows how the lenticular arrangement 58 directs the outputs of different sub-pixels within a subgroup of sub-pixels to different spatial locations.

The present invention provides mechanisms for increasing the resolution per view or increasing the number of views at a given resolution.

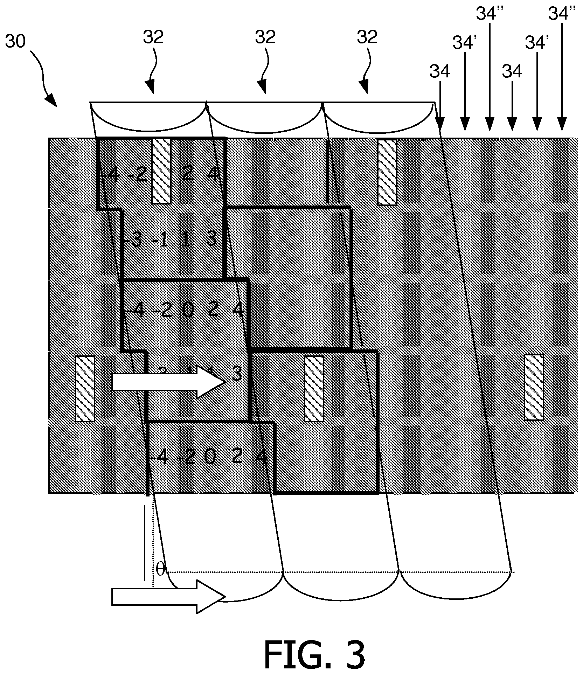

By way of example, Fig. 3 shows the sub-pixel layout of a 9-view display 30, and which uses an array of slanted lenticulars 32. The columns are arranged as columns of red (34), green (34') and blue (34") sub-pixels in sequence, and three overlying lenticulars 32 are shown. The numbers shown refer to the view number which the sub-pixels contribute to, with the views numbered from -4 to +4, with view 0 along the lenticulars elongate axis. When the aspect ratio (width: height) of the sub-pixels is 1:3 as in this example, such that each pixel comprises a row of three sub-pixels with a so called RGB configuration, one possible and preferred slant angle of the lenticulars' long axis with respect to the column direction is tan(θ)=1/6. As a result, the perceived resolution loss per view (compared to the 2D case) is a factor of 3 in both the horizontal and vertical direction instead of a factor of 9 in the horizontal direction when the slant angle theta is zero. This arrangement has a lenticular width of 4.5 sub-pixels, or the pitch of the lenticular is equal to the spacing of 4.5 neighboring sub-pixels in the row direction.

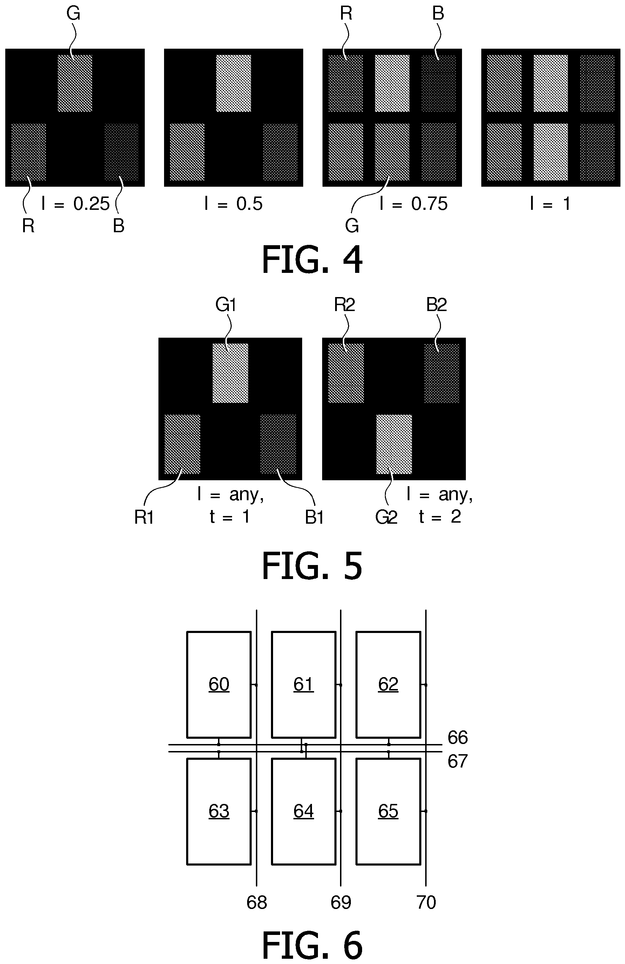

The invention is of particular interest for implementation using a known panel design in which sub-pixels of an RGB color pixel are built up by a spatially separated lower and higher half such as represented in Fig.4.

Each half has three sub-pixels of red (R) green (G) and blue (B), as shown in Fig. 4. The sub-pixels are controlled to provide four different intensity levels. For lower intensity levels I (I=0.25 and I=0.5) only one sub-pixel of each color is used. This means that those sub-pixels can be operated at higher brightness than if there were only three sub pixels.

For higher intensities (I=0.75 and I=1), all six sub-pixels are used.

The way the different levels are combined takes account of viewing angle performance and gamma stability. In particular, this six sub-pixel arrangement has been devised to improve angle performance of a 2D display. The arrangement does not require the pairs of sub-pixels in each column to be drivable to different non-zero voltages; hence they share the column data line.

An implementation of the invention using the pixel arrangement of Fig. 4 enables the number of views to be doubled at full resolution (i.e. the same pixel pitch, where each pixel is the group of six sub-pixels as shown), without increasing the panel resolution and the required electronics of the panel.

The invention provides driving of the sub-pixels in sub-frames. For the example two triplets of sub-pixels per pixel, i.e. half of the sub-pixels are driven in one sub-frame and the other half of the sub-pixels are driven in the next sub-frame. In this way, a high frame rate and high intensity of the display are used to enable a higher (vertical) resolution in the pixel column direction to be achieved.

In a lenticular or barrier based system, the amount of views is now doubled. Choosing a low crosstalk lens will result in acceptable crosstalk per new view. The invention combines interlacing of images combined with an autostereoscopic imaging arrangement, such as a lenticular lens array.

Fig. 5 shows how the sub-pixel configuration of Fig. 4 can be used to present two different images.

The sub-pixels are driven as checkerboard patterns. A first group of sub-pixels R1, G1 and B1 is driven during a first sub-frame time to provide the first sub-frame and then a second group of sub-pixels R1, G1 and B1 is driven during the second sub-frame time for providing the second sub-frame. Preferably a frame is driven with a frequency of 100Hz or more. In this way, each sub-frame or group of sub-pixels is updated at 50 frames per second or more, but shifted in time by 1/100 seconds or less for a faster display, i.e. with a refresh rate of higher than 100 Hz.

Although all sub-pixels can now be driven to independent voltage levels, by means of the time interlacing, only three column lines are required per color pixel. Thus, the complexity of the display panel wiring does not need to be increased to enable implementation of the invention. The invention can thus be implemented with existing technology as for example known for liquid crystal displays.

The way the sub-pixels are refreshed sequentially can be achieved in different ways.

A first approach is shown by the pixel represented in Fig. 6. Each pixel (with six sub-pixels) 60 to 65 is addressed by two row lines 66 and 67 and three column lines 68, 69 and 70. The row lines do not connect to all sub-pixels in a row, but instead connect to alternate sub-pixels from one row and alternate sub-pixels from the other row. This is shown in Fig. 6, and means that each row line controls two sub-pixels from one of the two rows and one from the other, i.e. the patterns shown in Fig. 5.

Instead of using interleaved checkerboard patterns as shown, the alternating pixel rows can be addressed at different times. Again, the same column conductors can be used to address the different sub-pixels at different times. There are many other possibilities, even at pixel level (i.e. with different pixels being divided into the two groups of sub-pixels differently).

Although the update of the sub-frames is separated by half a sub-frame, the holding time of each frame can be a full frame period so as to avoid flicker and light loss.

In the examples above, the pixel structure allows a pixel area to be driven as two pixels - i.e. there are six sub-pixels in each pixel area, so that two groups of three sub-pixels can be driven at different time. An alternative is to add switchable blocking elements which would alternately block half of the sub-pixels. In this case, the display can have for example three sub-pixels per pixel and each sub pixel is half covered when it is driven.

The lens arrangement used preferably has a low crosstalk configuration and the underlying pixel a banding friendly shape. Banding is a phenomenon where the lens images the black matrix of the display panel. Low crosstalk lenses are typically those with slant tan (angle) =1/3 or 0 and an integer horizontal width. When the sub-pixels are spatially alternated in checkerboard (as shown), the width/pitch of the lens should be an odd integer number of sub-pixels.

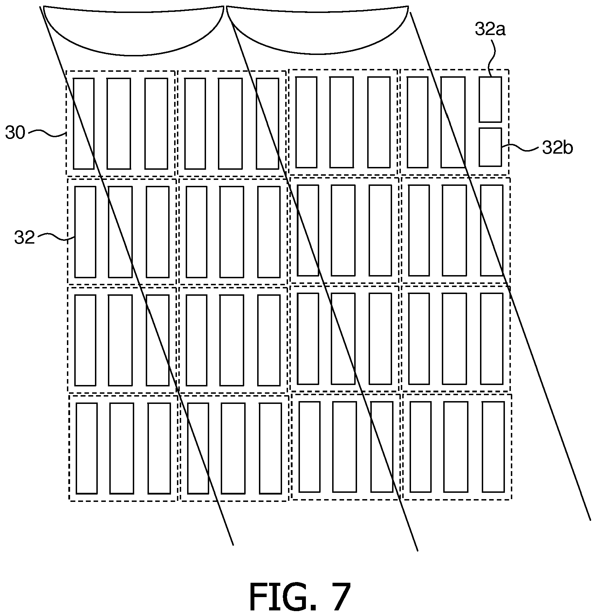

An example of preferred configuration is a 5 view system, with slant (tan (slang angle) =1/3, and lens pitch of 5 sub-pixels. This is shown in Fig. 7. The lens and sub-pixel arrangement gives a 10 view system while retaining a perfectly square 3D pixel grid. A 3D pixel is the picture element of the stereoscopic image displayed as observed by a viewer. It is distinct from the 2D pixels and their grid. Thus, each pixel area (shown as dotted squares 30 in Fig. 7) can be considered to comprise 6 sub-pixels (each rectangular pixel area 32 has a top sub-pixel and a bottom sub-pixel as shown only for top sub-pixel 32a and bottom sub-pixel 32b). There are 10 different relative positions of the sub-pixels with respect to the lens, giving rise to the 10 views, and each pixel has 6 sub-pixels at six different relative positions. Thus, each pixel area 30 can be addressed twice in sequence. In the same way as described above, this provides two display operations at the full resolution (i.e. a full color pixel is defined within each area 30).

The system explained above uses two sub-frame times. It is also possible to have a different number (n) of sub-frame times, by having 3n sub-pixels per pixel.

Some LCD designs using in-plane switching of the LC material allow a frame rate of 100 Hz. There is a trend towards using LC effects that enable an even faster LC response (e.g. the so-called optically compensated birefringence (OCB) effect), enabling a frame rate of for example 180 Hz.

The examples described above employ a liquid crystal display panel having, for example, a display sub-pixel pitch in the range 50µm to 1000 µm. However, it will be apparent to those skilled in the art that alternative types of display panel may be employed, such as organic light emitting diode (OLED) or cathode ray tube (CRT) display devices.

The driving method of the invention can be implemented in the display controller, for example the controller 13 as shown in Fig. 1.

The manufacture and materials used to fabricate the display device have not been described in detail, as these will be conventional and well known to those skilled in the art.

The preferred example of controllable lens array has segmented row and column electrodes, but only segmented column electrodes are required to enable compatibility with multiple different views.

The description above relates to color displays, in which each pixel comprises three sub-pixels. However, a pixel can comprise a single pixel element for a monochrome display. In this case, a pixel with two sub pixels can be driven in the manner of the invention.

There are many different possible combinations of slant angle and lens pitch, to create different numbers of views.

A first example of an imaging arrangement for use in this type of display is a barrier, for example with slits that are sized and positioned in relation to the underlying pixels of the display. The viewer is able to perceive a 3D image if his/her head is at a fixed position. The barrier is positioned in front of the display panel and is designed so that light from the odd and even pixel columns is directed towards the left and right eye of the viewer.

A drawback of this type of two-view display design is that the viewer has to be at a fixed position, and can only move approximately 3 cm to the left or right. In a more preferred embodiment there are not two sub-pixel columns beneath each slit, but several. In this way, the viewer is allowed to move to the left and right and perceives a stereo image in his eyes all the time.

The barrier arrangement is simple to produce but is not light efficient. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

A high number of views mean the image resolution per view is reduced because the total number of available pixels has to be distributed among the views. In the case of an n-view 3D display with vertical lenticular lenses, the perceived resolution of each view along the horizontal direction will be reduced by a factor of n relative to the 2D case. In the vertical direction the resolution will remain the same. The use of a barrier or lenticular that is slanted can reduce this disparity between resolution in the horizontal and vertical direction. In that case, the resolution loss can be distributed evenly between the horizontal and vertical directions.

## Claims

1. An autostereoscopic display comprising:
a display panel (3) having an array of pixels arranged in rows and columns, for producing a display output, each of the pixels comprising at least two sub-pixels and each sub-pixel having a spatially separated lower half and upper half which share a column data line,
an imaging arrangement (9) configured for directing the output from different sub-pixels to different spatial positions so as to enable an autostereoscopic view of the display output; and
a controller configured for controlling the output from the sub-pixel halves such that:
in a frame time comprising a first and second sub-frame time, the display panel (3) produces a frame of the display output,
**characterised in that**:
in a first sub-frame time, a first set of sub-pixel halves provides a first lower resolution sub-frame, and
in a second sub-frame time, a second set of sub-pixel halves different from the first set of sub-pixel halves provides a second lower resolution sub-frame,
wherein the first and second sub-frames together provide a complete higher spatial resolution frame with the information for enabling its autostereoscopic view, such that the complete spatial frame resolution is built up in a sequence.

2. An autostereoscopic display as claimed in claim 1, wherein the first and second sub-frames each include information for the left and right eyes of a viewer.

3. An autostereoscopic display as claimed in any of the previous claims, wherein the first and second sets of sub-pixel halves together comprise all the sub-pixel halves (5), and no sub-pixel half is in both of the first and second sets of sub-pixel halves.

4. An autostereoscopic display as claimed in any of the previous claims, wherein the sub-pixels are grouped into color pixels, each color pixel comprising two red sub-pixel halves, two green sub-pixel halves and two blue sub-pixel halves.

5. An autostereoscopic display as claimed in claim 1, wherein the frames are provided at a frame rate of 100Hz or more.

6. An autostereoscopic display as claimed in claim 1, wherein the imaging arrangement comprises an array of lenticulars for directing the output from different sub-pixels to the different spatial positions.

7. An autostereoscopic display as claimed in claim 6, wherein the pitch between lenticulars corresponds to the spacing of a row five neighboring sub-pixels along a row of sub-pixels.

8. An autostereoscopic display as claimed in claim 6, wherein the lenticulars have an elongated semi-cylindrical shape and are oriented such that their elongate axis is slanted with respect to the column direction of the pixels.

9. An autostereoscopic display as claimed in claim 1, wherein the sub-pixel halves are individually addressable and are emissive, transmissive, refractive and/or diffractive sub-pixels.

10. An autostereoscopic display as claimed in claim 9, wherein the display panel is any one of a liquid crystal display panel, a plasma display panel and a light emitting diode display panel.

11. A method for controlling an autostereoscopic display device comprising:
a display panel (3) having an array of pixels (5) for producing a display output, the pixels being arranged in rows and columns and each of the pixels comprising at least two sub-pixels and each sub-pixel having a spatially separated lower half and upper half which share a column data line; and
an imaging arrangement (9) configured for directing the output from different sub-pixels to different spatial positions so as to enable stereoscopic view of the display output,
the method comprising the steps of:
in a frame time comprising a first and second sub-frame time, displaying a frame of the display output,
**characterised in that** the method further comprises:
in a first sub-frame time, controlling a first set of sub-pixel halves to provide a first lower resolution sub-frame,
in a second sub-frame time, controlling a second set of sub-pixel halves different from the first set of sub-pixel halves to provide a second lower resolution sub-frame,
wherein the first and second sub-frames together provide a complete higher spatial resolution frame with the information for enabling its stereoscopic view, such that the complete spatial frame resolution is built up in a sequence.

12. A method as claimed in claim 11, wherein each of the first and second sub-frames of the display output include information for both eyes of the viewer simultaneously.

13. A method as claimed in claim 11, wherein the complete frame of the display output provides one set of autostereoscopic images and wherein the first and second sets of sub-pixel halves together comprise all the sub-pixel halves while no sub-pixel half is in both the first set and the second set.

14. A computer program comprising computer program code means adapted to perform all the steps of claim 11 when said program is run on the processor of an autostereoscopic display according to claim 1.

## Patentansprüche

1. Autostereoskopische Anzeige, umfassend:
eine Anzeigetafel (3) mit einer Anordnung von Pixeln, welche in Zeilen und Spalten angeordnet sind, zum Erzeugen eine Anzeigeausgabe, wobei jedes der Pixel zumindest zwei Teilpixel umfasst und jedes Teilpixel eine räumlich abgetrennte untere Hälfte und obere Hälfte aufweist, welche eine Spaltendatenleitung teilen,
eine Bildaufnahmeanordnung (9), welche zum Lenken der Ausgabe von unterschiedlichen Teilpixeln zu unterschiedlichen räumlichen Positionen konfiguriert ist, sodass eine autostereoskopische Ansicht der Anzeigeausgabe ermöglicht wird; und
eine Steuerung, welche zum Steuern der Ausgabe aus den Hälften der Teilpixel konfiguriert ist, sodass:
in einer Rahmenzeit, welche eine erste und zweite Teilrahmenzeit umfasst, die Anzeigetafel (3) einen Rahmen der Anzeigeausgabe erzeugt,
**dadurch gekennzeichnet, dass**:
in einer ersten Teilrahmenzeit ein erster Satz von Teilpixelhälften einen ersten Teilrahmen mit niedrigerer Auflösung bereitstellt, und
in einer zweiten Teilrahmenzeit ein zweiter Satz von Teilpixelhälften, welcher sich von dem ersten Satz von Teilpixelhälften unterscheidet, einen zweiten Teilrahmen mit niedrigerer Auflösung bereitstellt,
wobei der erste und zweite Teilrahmen zusammen einen vollständigen Rahmen mit höherer räumlicher Auflösung mit den Informationen zum Ermöglichen seiner autostereoskopischen Ansicht bereitstellen, sodass die vollständige räumliche Rahmenauflösung in einer Sequenz aufgebaut wird.

2. Autostereoskopische Anzeige nach Anspruch 1, wobei der erste und zweite Teilrahmen jeweils Informationen für das linke und rechte Auge eines Betrachters beinhaltet.

3. Autostereoskopische Anzeige nach einem der vorstehenden Ansprüche, wobei der erste und zweite Satz von Teilpixelhälfte zusammen alle Teilpixelhälften (5) umfassen und keine Teilpixelhälfte sowohl in dem ersten als auch dem zweiten Satz von Teilpixelhälften ist.

4. Autostereoskopische Anzeige nach einem der vorstehenden Ansprüche, wobei die Teilpixel in Farbpixeln gruppiert sind, wobei jedes Farbpixel zwei rote Teilpixelhälften, zwei grüne Teilpixelhälften und zwei blaue Teilpixelhälften umfasst.

5. Autostereoskopische Anzeige nach Anspruch 1, wobei die Rahmen mit einer Bildfrequenz von 100 Hz oder mehr bereitgestellt werden.

6. Autostereoskopische Anzeige nach Anspruch 1, wobei die Bildaufnahmeanordnung eine Anordnung von Lentikularen zum Lenken der Ausgabe von unterschiedlichen Teilpixeln zu den unterschiedlichen räumlichen Positionen umfasst.

7. Autostereoskopische Anzeige nach Anspruch 6, wobei der Zwischenraum zwischen Lentikularen dem Abstand einer Zeile fünf benachbarter Teilpixel entlang einer Zeile von Teilpixeln entspricht.

8. Autostereoskopische Anzeige nach Anspruch 6, wobei die Lentikulare eine längliche, halbzylindrische Form aufweisen und ausgerichtet sind, sodass ihre Längsachse in Bezug auf die Spaltenrichtung der Pixel geneigt ist.

9. Autostereoskopische Anzeige nach Anspruch 1, wobei die Teilpixelhälften einzeln adressierbar sind und emissive, transmissive, refraktive und/oder diffraktive Teilpixel sind.

10. Autostereoskopische Anzeige nach Anspruch 9, wobei die Anzeigetafel eine beliebige von einer Flüssigkristallanzeigetafel, einer Plasmaanzeigetafel und einer Leuchtdiodenanzeigetafel ist.

11. Verfahren zum Steuern einer autostereoskopischen Anzeigevorrichtung, umfassend:
eine Anzeigetafel (3) mit einer Anordnung von Pixeln (5), zum Erzeugen einer Anzeigeausgabe, wobei die Pixel in Zeilen und Spalten angeordnet sind und jedes der Pixel zumindest zwei Teilpixel umfasst und jedes Teilpixel eine räumlich abgetrennte untere Hälfte und obere Hälfte aufweist, welche eine Spaltendatenleitung teilen; und
eine Bildaufnahmeanordnung (9), welche zum Lenken der Ausgabe von unterschiedlichen Teilpixeln zu unterschiedlichen räumlichen Positionen konfiguriert ist, sodass stereoskopische Ansicht der Anzeigeausgabe ermöglicht wird,
wobei das Verfahren die folgenden Schritte umfasst:
in einer Rahmenzeit, welche eine erste und zweite Teilrahmenzeit umfasst, Anzeigen eines Rahmens der Anzeigeausgabe,
**dadurch gekennzeichnet, dass** das Verfahren weiter umfasst:
in einer ersten Teilrahmenzeit, Steuern eines ersten Satzes von Teilpixelhälften, um einen ersten Teilrahmen mit niedrigerer Auflösung bereitzustellen, und
in einer zweiten Teilrahmenzeit, Steuern eines zweiten Satzes von Teilpixelhälften, welcher sich von dem ersten Satz von Teilpixelhälften unterscheidet, um einen zweiten Teilrahmen mit niedrigerer Auflösung bereitzustellen,
wobei der erste und zweite Teilrahmen zusammen einen vollständigen Rahmen mit höherer räumlicher Auflösung mit den Informationen zum Ermöglichen seiner stereoskopischen Ansicht bereitstellen, sodass die vollständige räumliche Rahmenauflösung in einer Sequenz aufgebaut wird.

12. Verfahren nach Anspruch 11, wobei jeder von dem ersten und zweiten Teilrahmen der Anzeigeausgabe Informationen für beide Augen des Betrachters gleichzeitig beinhaltet.

13. Verfahren nach Anspruch 11, wobei der vollständige Rahmen der Anzeigeausgabe einen Satz von autostereoskopischen Bildern bereitstellt und wobei der erste und zweite Satz von Teilpixelhälften zusammen alle Teilpixelhälften umfassen, während keine Teilpixelhälfte sowohl in dem ersten Satz als auch in dem zweiten Satz ist.

14. Computerprogramm, umfassend Computerprogrammcodemittel, welche adaptiert sind, alle die Schritte nach Anspruch 11 durchzuführen, wenn das Programm auf dem Prozessor einer autostereoskopischen Anzeige nach Anspruch 1 ausgeführt wird.

## Revendications

1. Dispositif d'affichage autostéréoscopique comprenant :
un panneau d'affichage (3) ayant une série de pixels agencés en rangées et colonnes, pour produire une sortie d'affichage, chacun des pixels comprenant au moins deux sous-pixels et chaque sous-pixel ayant une moitié inférieure et une moitié supérieure séparées spatialement qui partagent une ligne de données de colonne,
un agencement d'imagerie (9) configuré pour diriger la sortie de différents sous-pixels vers différentes positions spatiales de façon à permettre une visualisation autostéréoscopique de la sortie d'affichage ; et
un dispositif de commande configuré pour commander la sortie des moitiés de sous-pixels de sorte que :
dans un temps de trame comprenant des premier et second temps de sous-trame, le panneau d'affichage (3) produit une trame de la sortie d'affichage,
**caractérisé en ce que**
dans un premier temps de sous-trame, un premier ensemble de moitiés de sous-pixel fournit une première sous-trame de résolution inférieure, et
dans un second temps de sous-trame, un second ensemble de moitiés de sous-pixel différent du premier ensemble de moitiés de sous-pixel fournit une seconde sous-trame de résolution inférieure,
dans lequel les première et seconde sous-trames fournissent conjointement une trame complète de résolution spatiale supérieure comportant les informations permettant sa visualisation autostéréoscopique de sorte que la résolution de la trame spatiale complète soit constituée en une séquence.

2. Dispositif d'affichage autostéréoscopique selon la revendication 1, dans lequel les première et seconde sous-trames incluent respectivement des informations pour les yeux gauche et droit d'un spectateur.

3. Dispositif d'affichage autostéréoscopique selon l'une quelconque des revendications précédentes, dans lequel les premier et second ensembles des moitiés de sous-pixel comprennent conjointement toutes les moitiés de sous-pixel (5) et aucune moitié de sous-pixel ne se trouve à la fois dans les premier et second ensembles de moitiés de sous-pixel.

4. Dispositif d'affichage autostéréoscopique selon l'une quelconque des revendications précédentes, dans lequel les sous-pixels sont groupés en pixels de couleur, chaque pixel de couleur comprenant deux moitiés de sous-pixel rouge, deux moitiés de sous-pixel vert et deux moitiés de sous-pixel bleu.

5. Dispositif d'affichage autostéréoscopique selon la revendication 1, dans lequel les trames sont fournies à une fréquence de trame de 100 Hz ou plus.

6. Dispositif d'affichage autostéréoscopique selon la revendication 1, dans lequel l'agencement d'imagerie comprend une série de lenticulaires pour diriger la sortie de différents sous-pixels vers différentes positions spatiales.

7. Dispositif d'affichage autostéréoscopique selon la revendication 6, dans lequel le pas entre les lenticulaires correspond à l'espacement de cinq sous-pixels voisins d'une rangée le long d'une rangée de sous-pixels.

8. Dispositif d'affichage autostéréoscopique selon la revendication 6, dans lequel les lenticulaires ont une forme semi-cylindrique allongée et sont orientés de telle sorte que leur axe allongé soit incliné par rapport à la direction de colonne des pixels.

9. Dispositif d'affichage autostéréoscopique selon la revendication 1, dans lequel les moitiés de sous-pixel sont individuellement adressables et sont des sous-pixels émetteurs, transmetteurs, réfracteurs et/ou diffracteurs.

10. Dispositif d'affichage autostéréoscopique selon la revendication 9, dans lequel le panneau d'affichage est l'un quelconque parmi un panneau d'affichage à cristaux liquides, un panneau d'affichage à plasma et un panneau d'affichage à diode électroluminescente.

11. Procédé de commande d'un dispositif d'affichage autostéréoscopique comprenant :
un panneau d'affichage (3) ayant une série de pixels (5) pour produire une sortie d'affichage, les pixels étant agencés en rangées et colonnes et chacun des pixels comprenant au moins deux sous-pixels et chaque sous-pixel ayant une moitié inférieure et une moitié supérieure séparées spatialement qui partagent une ligne de données de colonne, et
un agencement d'imagerie (9) configuré pour diriger la sortie de différents sous-pixels vers différentes positions spatiales de façon à permettre une visualisation autostéréoscopique de la sortie d'affichage ;
le procédé comprenant les étapes consistant à :
afficher une trame de la sortie d'affichage dans un temps de trame comprenant des premier et second temps de sous-trame,
**caractérisé en ce que** le procédé comprend en outre :
la commande d'un premier ensemble de moitiés de sous-pixel pour fournir une première sous-trame de résolution inférieure, dans un premier temps de sous-trame,
la commande d'un second ensemble de moitiés de sous-pixel différent du premier ensemble de moitiés de sous-pixel pour fournir une seconde sous-trame de résolution inférieure, dans un second temps de sous-trame,
dans lequel les première et seconde sous-trames fournissent conjointement une trame complète de résolution spatiale supérieure comportant les informations permettant sa visualisation autostéréoscopique de sorte que la résolution de la trame spatiale complète soit constituée en une séquence.

12. Procédé selon la revendication 11, dans lequel chacune des première et seconde sous-trames de la sortie d'affichage inclue des informations pour les deux yeux du spectateur simultanément.

13. Procédé selon la revendication 11, dans lequel la trame complète de la sortie d'affichage fournit un ensemble d'images autostéréoscopiques et dans lequel les premier et second ensembles des moitiés de sous-pixel comprennent conjointement toutes les moitiés de sous-pixel tandis qu'aucune moitié de sous-pixel ne se trouve à la fois dans les premier et second ensembles de moitiés de sous-pixel.

14. Programme informatique comprenant des moyens de codage de programme informatique adaptés pour réaliser toutes les étapes de la revendication 11 lorsque ledit programme est exécuté sur le processeur d'un dispositif d'affichage autostéréoscopique selon la revendication 1.
